(19) Europäisches Patentamt / European Patent Office / Office européen des brevets

(11) **EP 4 613 713 A1**

(12) **EUROPEAN PATENT APPLICATION**
published in accordance with Art. 153(4) EPC

(43) Date of publication:
**10.09.2025 Bulletin 2025/37**

(21) Application number: 23885925.0

(22) Date of filing: **08.06.2023**

(51) International Patent Classification (IPC):
$C01G\ 53/00$ (2025.01)   $H01M\ 4/36$ (2006.01)
$H01M\ 4/505$ (2010.01)   $H01M\ 4/525$ (2010.01)
$H01M\ 4/131$ (2010.01)   $H01M\ 10/054$ (2010.01)
$H01M\ 4/02$ (2006.01)

(52) Cooperative Patent Classification (CPC):
C01G 53/00; H01M 4/02; H01M 4/131; H01M 4/36;
H01M 4/505; H01M 4/525; H01M 10/054;
Y02E 60/10

(86) International application number:
**PCT/KR2023/007861**

(87) International publication number:
**WO 2024/096227 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.10.2022 KR 20220143187**

(71) Applicant: ECOPRO BM CO., LTD.
**Cheongju-si, Chungcheongbuk-do 28117 (KR)**

(72) Inventors:
• **JUNG, Kuhyun**
**Cheongju-si Chungcheongbuk-do 28116 (KR)**

• **LEE, Dongwook**
**Cheongju-si Chungcheongbuk-do 28116 (KR)**
• **KIM, Da Mo A**
**Cheongju-si Chungcheongbuk-do 28116 (KR)**
• **LEE, Myeong Joo**
**Cheongju-si Chungcheongbuk-do 28116 (KR)**
• **PARK, A Ram**
**Cheongju-si Chungcheongbuk-do 28116 (KR)**

(74) Representative: Beck & Rössig
**European Patent Attorneys
Denninger Str. 169
81925 München (DE)**

(54) **CATHODE ACTIVE MATERIAL FOR SODIUM SECONDARY BATTERY, PREPARATION METHOD THEREFOR, AND SODIUM SECONDARY BATTERY COMPRISING SAME**

(57) Provided are a method for producing a positive electrode active material for a sodium secondary battery including: a) feeding a composite transition metal hydroxide precursor and a first cobalt compound to a reactor and forming a second cobalt compound on a surface of particles of the composite transition metal hydroxide precursor; and b) mixing the composite transition metal hydroxide precursor having the second cobalt compound formed on the surface of the particles and a sodium compound and then performing a heat treatment to produce a sodium manganese-based oxide doped with cobalt (Co), wherein the sodium manganese-based oxide includes at least nickel (Ni), manganese (Mn), and cobalt (Co), and contains 55 mol% or more of manganese in all metals other than sodium, a positive electrode active material for a sodium secondary battery, and a positive electrode and a sodium secondary battery including the positive electrode active material.

FIG. 1

**Description**

[Technical Field]

The present invention relates to a positive electrode active material for a sodium secondary battery, a method for producing the same, and a sodium secondary battery including the same.

[Background Art]

A lithium ion secondary battery has been widely used as an energy storage device in various electronic technology fields. In recent years, as the demand of a lithium ion secondary battery rapidly increases, a sodium ion secondary battery is attracting attention for replacing lithium which is an expensive metal. Since a sodium ion secondary battery has a working principle of an insertion/desorption reaction similar to a lithium ion secondary battery, it is one of next generation materials having a high possibility of application to a secondary battery.

A transition metal oxide having a layered structure which is a representative form as a positive electrode active material has excellent electrochemical performance and is easily synthesized while having a simple structure. It is divided into an O3 type and a P2 type depending on the position of a sodium ion, and of the two, a positive electrode active material having a P2 type crystal structure has relatively high atmospheric and moisture stability and is less sensitive to synthesis conditions such as temperature and atmosphere. However, since the sodium ion having a large ionic radius changes its lattice structure during insertion/desorption in the layered structure, the positive electrode active material continues to cause phase transition, and due to the irreversible phase occurring during the process, the cycle life and the high capability rate of a sodium ion secondary battery are deteriorated.

In the layered structure transition metal oxide, a high-manganese (Mn)-based sodium nickel manganese oxide (MNMO) has benefits such as high capacity, price competitiveness (large reserves), and environmental friendliness, as compared with other transition metal oxides, but due to manganese included in an excessive amount in the oxide, it has relatively low electrical conductivity, and thus, the capability rate of the sodium secondary battery is low. As such, when the capability rate is low, the charge/discharge capacity and the life efficiency (capacity retention) are deteriorated during cycling of the sodium secondary battery.

In order to solve the problem, there were attempts to improve the problems of the high manganese-based oxide through structural improvement and surface modification of particles, such as adjustment of positive electrode particle size or coating of a particle surface, but they are not at a commercial level.

[Disclosure of Invention]

[Technical Problem]

In order to improve a decrease in electrical conductivity due to manganese included in an excessive amount in the high-manganese-based oxide, it is preferred to produce a ternary transition metal oxide which further includes a transition metal other than manganese. However, when a co-precipitation reaction proceeds for producing a ternary transition metal hydroxide precursor, a large amount of by-products such as manganese oxides (such as $MnO_2$), nickel oxides (NiO), and other transition metal oxides are synthesized due to the high reactivity of manganese, so that the metal composition in oxide particles is nonuniform, and thus, there are problems such as reduced energy density, increased electrolytic solution side reaction, and reduced high rate stability during charging and discharging of a battery.

Thus, an object of the present invention is to provide a sodium manganese-based oxide having a uniform transition metal composition in positive electrode active material particles, by performing Co coating on the surface of a transition metal hydroxide precursor under certain conditions.

Another object of the present invention is to provide a sodium secondary battery having improved electrochemical properties (such as discharge capacity, initial efficiency, high capability rate, and life characteristics), by suppressing production of a heterogeneous phase ($MnO_2$, NiO, $NaCoO_2$) on the surface and in the inside of a positive electrode material and synthesizing a sodium manganese-based oxide having a P2-type layered structure with high purity.

[Technical Solution]

In one general aspect, a method for producing a positive electrode active material for a sodium secondary battery includes: a) feeding a composite transition metal hydroxide precursor and a first cobalt compound to a reactor and forming a second cobalt compound on the surface of particles of the composite transition metal hydroxide precursor; and b) mixing the composite transition metal hydroxide precursor having the second cobalt compound formed on the surface of the particles and a sodium compound and then performing a heat treatment to produce a sodium manganese-based oxide doped with cobalt (Co), wherein the sodium manganese-based oxide includes at least nickel (Ni), manganese (Mn), and cobalt (Co), and contains 55 mol% or more of manganese in all metals other than sodium.

Step a) may include: a1) feeding the composite transition metal hydroxide precursor and a solvent to the reactor and performing stirring; and a2) feeding the first cobalt compound to the reactor and performing stirring to form a cobalt hydroxide on the surface of the composite transition metal hydroxide precursor particles.

The composite transition metal hydroxide precursor of step a) may contain 55 mol% or more of manganese in all metals.

The first cobalt compound of step a) may be $Co(OH)_2$, CoOOH, $Co(OCOCH_3)_2$, $Co(NO_3)_2$, $CoSO_4$, $Co(SO_4)_2$, or a combination thereof.

The heat treatment of the step b) may be performed at 800 to 1,100°C for 5 to 40 hours.

The sodium manganese-based oxide of step b) may have a P2-type layered structure.

In another general aspect, a positive electrode active material for a sodium secondary battery includes the sodium manganese-based oxide produced by the method for producing a positive electrode active material for a sodium secondary battery.

The sodium manganese-based oxide may include at least sodium (Na), nickel (Ni), manganese (Mn), and cobalt (Co) and have a manganese content of 55 mol% or more in all metals other than sodium (M), and the sodium manganese-based oxide may be a secondary particle formed by agglomeration of at least one primary particle and satisfy the following Relation 1:

$$[Relation\ 1]$$

$$(Dc-Ds)/Dt \leq \pm 10\%$$

wherein when an area corresponding to 0 to 50% of a length (R) from a center to a surface based on a cross section of the secondary particle is defined as a first area ($R_1$) and an area corresponding to 50 to 100% of the length is defined as a second area ($R_2$), Ds, Dc, and Dt are measured in the first area ($R_1$), the second area ($R_2$), and the entire cross section of the particle ($R_1+R_2$), respectively, and are molar concentrations of cobalt (Co) to all metals other than sodium (M), respectively.

The sodium manganese-based oxide may be a secondary particle formed by agglomeration of at least one primary particle, and the primary particles may include plate-shaped primary particles having an aspect ratio of 1 to 5.

The sodium manganese-based oxide may have an average particle diameter of the secondary particles of 5 to 15 μm.

The sodium manganese-based oxide may be represented by the following Chemical Formula 2:

[Chemical Formula 2]     $Na_aNi_xCo_yM1_zMn_{1-x-y-z}O_2$

wherein M1 is at least one selected from P, Sr, Ba, B, Ti, Mg, Zr, Al, W, Fe, Ce, Hf, Ta, Cr, F, Mg, Cr, V, Fe, Zn, Si, Y, Ga, Sn, Mo, Ge, Nd, Gd, and Cu, and $0.5 \leq a \leq 0.8$, $0.05 \leq x \leq 0.45$, $0.01 \leq y \leq 0.15$, $0 \leq z \leq 0.05$, and $0.55 \leq 1-x-y-z \leq 0.85$ are satisfied.

The sodium manganese-based oxide may show at least one peak selected from the group consisting of (004), (100), (101), (102), (103), (104), and (002) peaks by X-ray diffraction analysis (XRD).

The sodium manganese-based oxide may have a NiO ratio of 3% or less as measured by a Rietveld refinement method based on X-ray diffraction analysis.

In another general aspect, a positive electrode for a sodium secondary battery includes the positive electrode active material.

In still another general aspect, a sodium secondary battery includes the positive electrode.

[Advantageous Effects]

In the present invention, since an overall uniform Co compound is formed on the surface of composite transition metal hydroxide precursor particles, uniform Co doping may be performed in a post-process, and surface defects of positive electrode active material particles may be minimized to improve surface stability and improve electrochemical properties such as high capability rate and charge and discharge efficiency.

In the present invention, sodium (Na) is used instead of lithium (Li) which is an expensive metal, and a ratio of manganese (Mn) which is less expensive than nickel (Ni) is increased, thereby providing a high-Mn-based (NCM) positive electrode active material for a sodium secondary battery having improved price competitiveness.

In the present invention, a surface side reaction by an electrolytic solution during precursor Co coating and co doping into the positive electrode active material may be improved, and simultaneously, phase transition (P2-O2) occurring in a high voltage range during charging and discharging may be suppressed to improve cycle life characteristics.

[Brief Description of Drawings]

FIG. 1 is a surface SEM photograph of positive electrode active material particles according to Example 1.

FIGS. 2A and 2B are surface SEM/EDS photographs (FIG. 2A) and cross-sectional SEM/EDS photographs (FIG. 2B) of positive electrode active material secondary particles according to Example 1, respectively.

FIG. 2C is a graph (EDS line scanning) showing a change in contents of metal elements (Ni, Co, Mn) through EDS analysis for a direction indicated in the cross-sectional SEM image of the positive electrode active material secondary particles produced in Example 1.

FIGS. 3A and 3B are surface SEM/EDS photographs (FIG. 3A) and cross-sectional SEM/EDS photographs (FIG. 3B) of positive electrode active material secondary particles according to Example 2, respectively.

FIG. 3C is a graph (EDS Line scanning) showing a change in contents of metal elements (Ni, Co, Mn) through EDS analysis for a direction indicated in the cross-sectional SEM image of the positive electrode active material secondary particles produced in Example 2.

FIG. 4 is surface SEM/EDS photographs of positive electrode active material secondary particles produced in Comparative Example 2.

FIG. 5 shows results of XRD analysis of positive electrode active materials (bulk) produced in Example 1 and Comparative Example 1.

[Best Mode for Carrying Out the Invention]

Advantages and features of the present invention and methods to achieve them will be elucidated from exemplary embodiments described below in detail with reference to the accompanying drawings. However, the present invention is not limited to exemplary embodiments disclosed below, but will be implemented in various forms, and the exemplary embodiments of the present invention make disclosure of the present invention thorough and are provided so that those skilled in the art can easily understand the scope of the present invention. Therefore, the present invention will be defined by the scope of the appended claims.

Unless otherwise defined herein, all terms used in the specification (including technical and scientific terms) may have the meaning that is commonly understood by those skilled in the art. Throughout the present specification, unless explicitly described to the contrary, "comprising" any elements will be understood to imply further inclusion of other elements rather than the exclusion of any other elements. In addition, unless explicitly described to the contrary, a singular form includes a plural form herein.

An exemplary embodiment of the present invention provides a method for producing a positive electrode active material for a sodium secondary battery. The production method includes: a) feeding a composite transition metal hydroxide precursor and a first cobalt compound to a reactor and forming a second cobalt compound on the surface of particles of the composite transition metal hydroxide precursor; and b) mixing the composite transition metal hydroxide precursor having the second cobalt compound formed on the surface of the particles and a sodium compound and then performing a heat treatment to produce a sodium manganese-based oxide doped with cobalt (Co), wherein the sodium manganese-based oxide includes at least nickel (Ni), manganese (Mn), and cobalt (Co), and contains 55 mol% or more of manganese in all metals other than sodium.

According to the production method of the present invention, a high-manganese NCM oxide having a uniform ternary transition metal composition may be synthesized by coating a binary transition metal hydroxide precursor with cobalt and then performing a firing process. The problem of low electrical conductivity of a conventional high-manganese-based oxide may be improved by cobalt element doping, and a problem in which a large amount of manganese oxides (such as $MnO_2$) are synthesized due to high reactivity of manganese during a co-precipitation reaction for producing the ternary transition metal hydroxide precursor may be solved.

a) is a step of forming a second cobalt compound on the surface of the composite transition metal hydroxide precursor particles, and specifically, may include: a1) feeding the composite transition metal hydroxide precursor and a solvent to the reactor and performing stirring; and a2) feeding the first cobalt compound to the reactor and performing stirring to form a cobalt hydroxide ($Co(OH)_2$) on the surface of the composite transition metal hydroxide precursor particles.

In a conventional dry coating process or a conventional coating process performed on the surface of the positive electrode active material, when a heat treatment is performed at a high temperature after coating, it may be difficult to form a uniform second cobalt compound throughout the surface of the particles, such as a coating layer in an island form being formed on the surface of the particles, and also, it may be difficult to expect uniform cobalt doping simultaneously with a sufficient doping amount into the particles. The formation of the coating layer and the distribution of non-uniform cobalt on the surface and in the inside of the particles as such may cause surface defects to increase a contact area (specific surface area) with an electrolytic solution, and cause problems such as a battery swelling phenomenon by an electrolytic solution side reaction and decreased cycle life. In the present invention, since an overall uniform Co compound is formed on the surface of composite transition metal hydroxide precursor particles, uniform Co doping may be performed in a post-process, and surface defects of positive electrode active material particles may be minimized to improve surface stability and improve electrochemical properties such as high capability rate and charge and discharge efficiency.

a1) may be a step of feeding the composite transition metal hydroxide precursor and a solvent to the reactor and performing stirring.

The composite transition metal hydroxide precursor and the solvent may be mixed in the reactor at a weight ratio of 0.5:1.5 to 1.5:0.5 or 0.7:1.2 to 1.2:0.7, and as an example, 1:1.

A basic solution may be fed to the reactor to adjust the pH to 10 to 12, a small amount of an ammonium solution may be used as a complex, and a stirring speed may be 200 to 500 rpm, 200 to 400 rpm, or 300 to 400 rpm, but the present invention is not limited thereto. Thus, the second cobalt compound may be uniformly formed on the surface of the composite transition metal hydroxide precursor particles in a post-process step a2).

a2) may be a step of feeding the first cobalt compound to the reactor and performing stirring to form a cobalt hydroxide ($Co(OH)_2$) on the surface of the composite transition metal hydroxide precursor.

The first cobalt compound may be fed to the reactor so that the sum of the composite transition metal hydroxide precursor and the solvent, and the first cobalt compound are mixed at a weight ratio of 5:1 to 1.1:1, 4.5:1 to 1.5:1, preferably 4:1 to 1.5:1, or 3:1 to 1.5:1. In addition, the first cobalt compound may be fed to the reactor so that a ratio (Co/M) of a cobalt (Co) content to all metals (M) of the composite transition metal hydroxide precursor is 0.01 to 0.15, preferably 0.01 to 0.12, 0.01 to 0.1, 0.02 to 0.15, or 0.03 to 0.12, in which a first cobalt compound aqueous solution having a concentration of 1.5 to 2.5 M may be fed for 0.5 to 5 hours, 0.5 to 4 hours, 0.5 to 3 hours, or 1 to 3 hours of operation so that the first cobalt compound satisfies the Co/M range. More specifically, the feeding of the first cobalt compound aqueous solution may be performed at 2 to 20 ml/min, 2 to 18 ml/min, or 2 to 16 ml/min for 0.5 to 5 hours, 0.5 to 4 hours, 0.5 to 3 hours, or 0.5 to 1.5 hours. When the feeding conditions of the first cobalt compound are exceeded, oxide secondary particles or primary particles may not grow to a uniform shape during the firing of the positive electrode active material due to cobalt agglomeration.

When the feeding speed is exceeded, it is difficult to uniformly form the cobalt hydroxide on the surface of the composite transition metal hydroxide precursor particles, and on the contrary, when the feeding speed is below the range, a process time is extended to increase the coats, and Ni elution may occur inside the transition metal hydroxide precursor particles.

Step a) may be performed at a temperature of 40 to 70°C or 45 to 65°C under an inert atmosphere such as nitrogen or argon, and a reaction time may be 60 to 90 minutes, for example, 75 to 105 minutes. Thus, the effects described above may be further improved.

The composite transition metal hydroxide precursor may be represented by the following Chemical Formula 1:

$$[\text{Chemical Formula 1}] \qquad Ni_xMn_{1-x}(OH)_2$$

wherein $0.05 \leq x \leq 0.45$ and $0.55 \leq 1-x \leq 0.95$ are satisfied.

The nickel manganese hydroxide precursor may have a mole ratio (Mn/M) of manganese (Mn) to all metals (M) of 0.55 to 0.95. When the content range including manganese is satisfied, a high capacity may be shown under a high voltage operation environment and price competitiveness may be secured. The Mn content may be more preferably $0.60 \leq 1-x \leq 0.85$, $0.60 \leq 1-x \leq 0.80$, or $0.60 \leq 1-x \leq 0.70$ in Chemical Formula 1.

The nickel manganese hydroxide precursor may have a mole ratio (Ni/M) of nickel (Ni) to all metals (M) of 0.05 to 0.45. In the content range including nickel, a problem in which the structural stability and the chemical stability of an active material are deteriorated depending on a change in a nickel oxidation number, which arises as the nickel content increases, may be improved. The content of Ni may be more preferably $0.1 \leq x \leq 0.45$, $0.2 \leq x \leq 0.45$, $0.25 \leq x \leq 0.45$, or $0.3 \leq x \leq 0.4$ in Chemical Formula 1.

The solvent may be one or more selected from deionized water, distilled water, and ethanol, preferably may be deionized water. Herein, a temperature of the solvent used in the mixing may be 1 to 80°C or 5 to 50°C, but the present invention is not limited thereto.

The basic solution may be a hydroxide of an alkali metal or an alkaline earth metal such as NaOH, KOH, or $Ca(OH)_2$, a hydroxide of them, or a combination thereof, and may be added for adjusting the pH of the solution in the reactor.

The ammonium solution may include $NH_4OH$, $(NH_4)_2SO_4$, $NH_4NO_3$. $NH_4Cl$, $CH_3COONH_4$, $NH_4CO_3$, or a combination thereof, and may effectively co-precipitate the first cobalt compound in the reactor on the surface of the composite transition metal hydroxide particles, as a complex.

The first cobalt compound may be a solution including a cobalt-containing compound, and may be produced by adding the first cobalt compound to a mixed solvent of water or an organic solvent such as alcohol which may be uniformly mixed with water. The first cobalt-containing compound may be $Co(OH)_2$, $CoOOH$, $Co(OCOCH_3)_2$, $Co(NO_3)_2$, $CoSO_4$, $Co(SO_4)_2$, or a combination thereof, and preferably, may be $CoSO_4$ and/or $Co(SO_4)_2$. Herein, the first cobalt compound may include hydroxides and anhydrides of the materials described above. When $CoSO_4 \cdot 7H_2O$ or $CoSO_4 \cdot$anhydride, preferably $CoSO_4 \cdot 7H_2O$ is used, a reaction with NaOH is easily performed, so that the second cobalt compound ($Co(OH)_2$) may be uniformly formed on the surface of the precursor, and then cobalt may be uniformly doped during firing with a Na source. However, when a metal other than Co is doped, for example, a Fe-containing compound is used as a doping source, the doping metal may be concentrically coated/doped only on some particles of a plurality of secondary particles, so that Fe may be non-uniformly distributed on the surface portion of the positive electrode active material particles. In addition, the Fe-containing compound may be oxidized and eluted in a feeding process for coating the surface of hydroxide precursor particles.

The reactor may be used without limitation as long as it is a reactor for co-precipitation which is commonly used in the production of a positive electrode active material hydroxide precursor.

The production method of the present invention may further include a drying process after step a). The drying process is a process for removing moisture from the composite transition metal hydroxide precursor in which the second cobalt compound produced in step a) has been formed, and may be drying at a temperature of 100 to 300°C for 12 hours or more under vacuum conditions.

b) may be a step of mixing the composite transition metal hydroxide precursor having the second cobalt compound formed on the surface of the particles and a sodium compound and then performing a heat treatment in order to produce a sodium manganese-based oxide doped with cobalt.

The mixing of the composite transition metal hydroxide precursor and the sodium compound may be mixing so that the transition metal of the precursor: sodium is mixed at a mole ratio of 1:0.5 to 1:0.8, 1:0.6 to 1:0.8, 1:0.6 to 1:0.75, or 1:0.65 to 1:0.75. When the mixing amount of the sodium compound is within the range, the crystal structure of the produced positive electrode active material may be a P2 type layered structure, and thus, may be less sensitive to high atmospheric and moisture safety and synthesis conditions (such as temperature and atmosphere). In addition, a battery discharge capacity may be improved in the sodium content range, and Na which does not react and remains may be minimized.

The heat treatment may be performed at a temperature of 800°C to 1,100°C. When a firing temperature is within the range, a reaction between raw materials may sufficiently occur and particles may uniformly grow. The heat treatment may be performed more preferably at a temperature of 800 to 1,050°C, 850 to 1,050°C, or 900 to 1,000°C. The heat treatment may be performed for 5 hours to 40 hours. When a firing time is within the range, a highly crystalline positive electrode active material may be obtained, the size of the particles is appropriate, and production efficiency may be improved. The heat treatment may be performed more preferably for 5 to 20 hours, 5 to 18 hours, 8 to 15 hours, or 10 to 14 hours.

The sodium compound may be at least one selected from the group consisting of $Na_2CO_3$, NaOH, $NaNO_3$, $CH_3COONa$, and $Na_2(COO)_2$, and preferably, may be $Na_2CO_3$, NaOH, or a combination thereof.

The sodium manganese-based oxide may be uniformly doped with cobalt on the surface and in the inside of the particles and may have a P2-type layered structure. Even when the coating and the doping of the transition metal compound are performed by the same method as the production method, in the case of an element other than cobalt (Co), such as iron (Fe), titanium (Ti), and magnesium (Mg), a coating layer is formed, for example, the doping metal is concentrically distributed in a surface portion of the oxide secondary particles, or transition metal coating/doping may be performed non-uniformly, for example, a continuously increasing or continuously decreasing concentration gradient into the oxide secondary particles is shown. That is, in the present invention, the sodium manganese-based oxide particles may form a P2-type layered structure and simultaneously may synthesize a ternary transition metal oxide having a uniform composition.

The production method of the present invention may further include a water washing process and a drying process after step b). The water washing process is a process for removing an unreacted material, impurities, and residual sodium, and may be feeding the positive electrode active material produced in step b) to a reactor to which one or more selected from deionized water, distilled water, and ethanol is fed, and performing water washing at a temperature of 1 to 80°C or 5 to 50°C at a stirring speed of 200 to 500 rpm, 200 to 400 rpm, or 300 to 400 rpm for 0.5 to 5 hours, 0.5 to 4 hours, 0.5 to 3 hours, or 0.5 to 1.5 hours. The drying process is a process for removing moisture from the positive electrode active material including moisture through the water washing, and may be drying at a temperature of 100 to 300°C for 12 hours under vacuum conditions.

Another exemplary embodiment of the present invention provides a positive electrode active material for a sodium secondary battery including the sodium manganese-based oxide produced by the above method. The sodium manganese-based oxide may include at least sodium (Na), nickel (Ni), manganese (Mn), and cobalt (Co), and have a manganese content of 55 mol% or more in all metals other than sodium (M).

The sodium manganese-based oxide is an NCM-based sodium nickel-cobalt manganese oxide including at least sodium, nickel, cobalt, and manganese. The sodium manganese-based oxide is a high-manganese (high-Mn)-based oxide containing 55 mol% or more of manganese in all metals other than sodium, and the content of manganese in metals other than sodium may be 55 mol% or more, 60 mol% or more, or 65 mol% or more, and though the upper limit is not particularly limited, may be, for example, 85 mol% or less, 80 mol% or less, or 75 mol% or less. As the content of manganese in metals other than sodium increases, a high capacity may be exerted under a high voltage operation environment, and both nickel and cobalt concentrations may be decreased to increase price competitiveness.

Meanwhile, as described above, when doping by Co coating is performed on binary transition metal hydroxide precursor particles, occurrence of manganese oxide (such as $MnO_2$) by-products synthesized in a large amount, which is a problem during production of the high-manganese ternary hydroxide precursor, may be suppressed. In addition, as comparison with a technology of forming a coating layer by distributing Co concentrically only on the surface of the oxide particles, in the present invention, the effects described above may be further improved by uniformly doping the inside and the surface of the oxide secondary particles with Co. Meanwhile, when Co which is an electrochemically active metal is doped, deterioration of the surface of the oxide particles may be prevented, and also, Co may participate in an oxide reduction reaction during charging/discharging of a sodium secondary battery, and thus, a discharge capacity may be increased as compared with the case of coating/doping with other metals.

The sodium manganese-based oxide is a secondary particle formed by agglomeration of at least one primary particle, and may satisfy the following Relation 1:

[Relation 1]

$$(Dc-Ds)/Dt \leq \pm 10\%$$

wherein when an area corresponding to 0 to 50% of a length (R) from a center to a surface based on a cross section of the secondary particle is defined as a first area ($R_1$) and an area corresponding to 50 to 100% of the length is defined as a second area ($R_2$), Ds, Dc, and Dt are measured in the first area ($R_1$), the second area ($R_2$), and the entire cross section of the particle ($R_1+R_2$), respectively, and are molar concentrations of cobalt (Co) to all metals other than sodium (M), respectively.

The sodium manganese-based oxide may satisfy, for example, $(Dc-Ds)/Dt \leq \pm 9\%$, $(Dc-Ds)/Dt \leq \pm 8\%$, $(Dc-Ds)/Dt \leq \pm 7\%$, $(Dc-Ds)/Dt \leq \pm 6\%$, $(Dc-Ds)/Dt \leq \pm 5\%$, $(Dc-Ds)/Dt \leq \pm 4\%$, $(Dc-Ds)/Dt \leq \pm 3\%$, $(Dc-Ds)/Dt \leq \pm 2\%$, or $(Dc-Ds)/Dt \leq \pm 1\%$; $0 \leq (Dc-Ds)/Dt \leq 9\%$, $0 \leq (Dc-Ds)/Dt \leq 8\%$, $0 \leq (Dc-Ds)/Dt \leq 7\%$, $0 \leq (Dc-Ds)/Dt \leq 6\%$, $0 \leq (Dc-Ds)/Dt \leq 5\%$, $0 \leq (Dc-Ds)/Dt \leq 4\%$, $0 \leq (Dc-Ds)/Dt \leq 3\%$, $0 \leq (Dc-Ds)/Dt \leq 2\%$, or $0 \leq (Dc-Ds)/Dt \leq 1\%$; or $0 \geq (Dc-Ds)/Dt \geq -9\%$, $0 \geq (Dc-Ds)/Dt \geq -8\%$, $0 \geq (Dc-Ds)/Dt \geq -7\%$, $0 \geq (Dc-Ds)/Dt \geq -6\%$, $0 \geq (Dc-Ds)/Dt \geq -5\%$, $0 \geq (Dc-Ds)/Dt \geq -4\%$, $0 \geq (Dc-Ds)/Dt \geq -3\%$, $0 \geq (Dc-Ds)/Dt \geq -2\%$, or $0 \geq (Dc-Ds)/Dt \geq -1\%$. When the concentration distribution of cobalt in the sodium manganese-based oxide particles satisfies the designed range, a Co element is uniformly distributed overall based on the cross section of the secondary particles, thereby forming the ternary transition metal oxide. Accordingly, in the present invention, a sodium secondary battery having improved electrochemical properties (such as discharge capacity, initial efficiency, high capability rate, and life characteristics) may be provided, by suppressing production of a heterogeneous phase ($MnO_2$, $CoO_2$) on the surface and in the inside of a positive electrode material and synthesizing a sodium manganese-based oxide having a P2-type layered structure with high purity.

Herein, the first area ($R_1$) may be an area corresponding to 0-50%, 0-40%, 0-30%, 0-20%, 0-10%, 30-50%, 40-50%, or 20-30% of the length (100%) from the particle center to surface, and the second area ($R_2$) may be an area corresponding to 50-100%, 60-100%, 70-100%, 80-100%, 90-100%, 50-70%, 50-60%, or 70-80% of the length (100%) from the particle center to surface, based on the cross section of the secondary particles.

Meanwhile, the cobalt (Co) concentration may be calculated after measurement with X-ray photoelectron spectroscopy, SEM-EDS, or TEM-EDS, but the present invention is not limited thereto.

The sodium manganese-based oxide may be represented by the following Chemical Formula 2:

[Chemical Formula 2]        $Na_aNi_xCo_yM1_zMn_{1-x-y-z}O_2$

wherein M1 is at least one selected from P, Sr, Ba, B, Ti, Mg, Zr, Mn, Al, W, Fe, Ce, Hf, Ta, Cr, F, Mg, Cr, V, Fe, Zn, Si, Y, Ga, Sn, Mo, Ge, Nd, Gd, and Cu, and $0.5 \leq a \leq 0.8$, $0.05 \leq x \leq 0.45$, $0.01 \leq y \leq 0.15$, and $0.55 \leq 1-x-y-z \leq 0.85$ are satisfied.

The sodium manganese-based oxide of Chemical Formula 2 may have a mole ratio (Na/M) of sodium (Na) to all metals other than sodium (M) of 0.5 to 0.8. In Chemical Formula 2, when the content of Na corresponding to a is less than 0.5, the capacity may be lowered, and when it is more than 0.8, the position of a sodium ion changes so that a crystal structure of a O3 type may be shown, and the O3 type positive electrode active material may be more sensitive to low atmosphere and moisture stability, and synthesis conditions (such as temperature and atmosphere) than a P2 type. More preferably, Na may satisfy 0.60≤a≤0.80, 0.60≤a≤0.75, or 0.65≤a≤0.75.

The sodium manganese-based oxide may have a mole ratio (Mn/M) of manganese (Mn) to all metals other than sodium (M) of 0.55 to 0.85. When the content range including manganese is satisfied, a high capacity may be shown under a high voltage operation environment and price competitiveness may be secured. The content of Mn may be more preferably 0.60≤1-x-y-z≤0.85, 0.60≤1-x-y-z≤0.80, or 0.60≤1-x-y-z≤0.70 in Chemical Formula 2.

The manganese-based sodium composite transition metal oxide may have a mole ratio (Ni/M) of nickel (Ni) to all metals other than sodium (M) of 0.05 to 0.45. In the content range including nickel, a problem arising as the nickel content increases, that is, a problem in which the structural stability and the chemical stability of an active material are deteriorated depending on a change in a nickel oxidation number may be suppressed. The content of Ni may be more preferably 0.1≤x≤0.45, 0.2≤x≤0.45, 0.25≤x≤0.45, or 0.3≤x≤0.4 in Chemical Formula 2.

In addition, the sodium transition metal oxide may have a mole ratio (Ni/Mn) of nickel to manganese of 0.05 to 0.75, 0.1 to 0.7, 0.2 to 0.7, 0.3 to 0.6, or 0.4 to 0.6. Thus, the capacity is higher with higher Mn, but initial deterioration may occur in cell life, and it is common that the life is increased as a Ni content is increased, but since Mn is more useful in terms of price than Ni, electrochemical properties may be improved by doping with cobalt (Co) at a high ratio of a Mn content, considering the cost aspect, in a sodium ion secondary battery.

The sodium manganese-based oxide includes a secondary particle formed by agglomeration of at least one primary particle. When the primary particle has a long axis direction (a-axis), a short axis direction (b-axis), and a thickness direction (c-axis), the primary particles may include plate type particles, and the plate type means that the length in the thickness direction (c-axis) of the primary particle is shorter than the length of the long axis (a-axis) and the short axis (b-axis) in a plane direction of the primary particle. In addition, a plane including the long axis and the short axis of the primary particle may be rectangular, oval, hexagonal plate-shaped or amorphous in which the long axis or the short axis is different from each other, or may have a circular or square shape which is identical to each other, but the present invention is not limited thereto.

The sodium manganese-based oxide may have an aspect ratio of the primary particles of 1 to 5, 1 to 4, 2 to 5, or 2 to 4. In an exemplary embodiment, the sodium manganese-based oxide may have an average particle diameter of the secondary particles of 5 to 15 μm. In addition, an average long axis length of the primary particles may be 1 to 3.5 μm. The primary particles and the secondary particles included in the positive electrode active material satisfy the above conditions, thereby improving the particle density (tap density) in the positive electrode active material. Accordingly, the electrochemical properties of the positive electrode active material may be improved.

Herein, in the present invention, 50% or more, for example, 60%, or 70% or more of the total number of primary particles forming the secondary particles may have the aspect ratio, the long axis length, and/or the short axis length in the range described above, or at least 10 primary particles of the primary particles forming the secondary particles may have the aspect ratio, the long axis length, and/or the short axis length in the range described above.

The sodium manganese-based oxide may show at least one peak selected from the group consisting of (004), (100), (101), (102), (103), (104), and (002) peaks, and preferably, may show all of (004), (100), (101), (102), (103), (104), and (002) peaks, by X-ray diffraction analysis (XRD). The peaks are those forming the P2-type layered structure, and the present invention has a technical feature in that the P2-type layered structure is stably formed and maintained even after doping the sodium manganese-based oxide with Fe. As described above, the positive electrode active material having the P2-type layered structure is less sensitive to synthesis conditions such as relatively high atmospheric and moisture stability, temperature, and atmosphere.

The sodium manganese-based oxide may have a NiO ratio of 3% or less, for example, 2.9% or less, 2.7% or less, 2.5% or less, or 2.2% or less, as measured by a Rietveld refinement method based on X-ray diffraction analysis. Thus, occurrence of oxide by-products such as NiO is suppressed, and a transition metal oxide having a uniform composition may be produced. The NiO ratio may be measured by the Rietveld refinement method based on X-ray diffraction analysis, but the present invention is not limited thereto.

Another exemplary embodiment of the present invention provides a positive electrode for a sodium secondary battery and a sodium secondary battery including the positive electrode active material.

The positive electrode includes a positive electrode active material layer positioned on a positive electrode current collector, and the positive electrode active material according to an aspect of the present invention is present on a positive electrode active material layer.

The positive electrode current collector is not particularly limited as long as it has a conductivity without causing a chemical change in a battery, and for example, stainless steel, aluminum, nickel, titanium, baked carbon, or aluminum or stainless steel which is surface-treated with carbon, nickel, titanium, silver, or the like, and the like may be used. In addition, the positive electrode current collector may have a thickness of usually 3 to 500 μm, and fine unevenness may be formed on the surface of the current collector to increase adhesive strength to the positive electrode active material. The positive electrode current collector may be provided in various forms such as a film, a sheet, a foil, a net, a porous body, foam, and a nonwoven fabric body.

In addition, the positive electrode active material layer may be a layer including a conductive material and a binder with the positive electrode active material described above.

Herein, the conductive material is used for imparting conductivity to an electrode and may be used without particular limitation as long as it has a conductivity without causing a chemical change in a positive electrode active material. A non-limiting example of the conductive material may include graphites such as natural graphite or artificial graphite; carbon-based materials such as carbon black, acetylene black, ketjen black, channel black, furnace black, lamp black, thermal black, and carbon fiber; metal powder or metal fiber such as copper, nickel, aluminum, and silver; conductive whisker such as zinc oxide and potassium titanate; conductive metal oxides such as titanium oxide; conductive polymers such as a polyphenylene derivative, or the like. The conductive material may be usually included at 1 wt% to 30 wt% based on the total weight of the positive electrode active material layer.

In addition, the binder may serve to improve adhesion between positive electrode active material particles and adhesive strength between the positive electrode active material and the current collector. A non-limiting example of the binder may include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), sulfonated-EPDM, styrene-butadiene rubber (SBR), fluorine rubber, various copolymers thereof, or the like. The binder may be included at 1 wt% to 30 wt%, based on the total weight of the positive electrode active material layer.

The positive electrode according to an exemplary embodiment of the present invention may be produced according to a common method for producing a positive electrode for a sodium secondary battery, except for using the positive electrode active material described above. For example, the positive electrode active material, and selectively, a slurry for forming a positive electrode active material layer including the binder and the conductive material are applied on a positive electrode current collector, and drying and rolling are performed to produce a positive electrode. According to another exemplary embodiment, the slurry for a positive electrode active material layer is cast on a separate support and a positive electrode active material layer is peeled off from the support to obtain a film, which is laminated on the positive electrode current collector, thereby producing the positive electrode.

According to another aspect of the present invention, an electrochemical device including the positive electrode is provided. Herein, the electrochemical device may be, specifically, a battery, a capacitor, and the like, and more specifically, a sodium secondary battery.

The sodium secondary battery includes a positive electrode, a negative electrode placed to face the positive electrode, a separator interposed between the positive electrode and the negative electrode, and an electrolyte (electrolytic solution). In addition, the sodium secondary battery may include a battery container (case) which stores an electrode assembly including the positive electrode, the negative electrode, and the separator, and a sealing member for sealing the battery container.

Herein, the sodium secondary battery may be classified into a can-type sodium secondary battery in which the electrode assembly is built into a metal can and a pouch-type sodium secondary battery in which the electrode assembly is built into a pouch formed of a sheet such as an aluminum laminate, depending on the shape of the battery container (case).

In particular, in the case of the pouch type sodium secondary battery using the positive electrode including the positive electrode active material according to various exemplary embodiments of the present invention, a possibility of causing a side reaction between the positive electrode active material and the electrolytic solution is low, and thus, stability during storage and/or operation is improved and also gassing is reduced.

Hereinafter, the present invention will be described in detail by the examples, however, the examples are for describing the present invention in more detail, and the scope of the present invention is not limited to the following examples.

**Examples**

Production Example 1. Production of positive electrode active material

Example 1

(a) Production of precursor

NaOH and $NH_4OH$ were fed to a mixed aqueous solution in which $NiSO_4 \cdot 6H_2O$ and $MnSO_4 \cdot H_2O$ inside a reactor were mixed at a mole ratio of 35:65 while performing stirring. The temperature in the reactor was maintained at 45°C, and washing and dehydration were performed after reaction completion to obtain a $Ni_{0.35}Mn_{0.65}(OH)_2$ precursor having an average particle diameter of 10 $\mu$m.

(b) Coating of precursor

NaOH was fed to the reactor in which the precursor obtained in step (a) was stirred. Thereafter, a $CoSO_4 \cdot 7H_2O$ aqueous solution was fed to the stirred reactor at a speed of 2.5 ml/min for 60 minutes. At this time, $CoSO_4 \cdot 7H_2O$ was weighed so that the Co/(Ni+Co+Mn) ratio was 10 mol% and then fed. After completing the reaction, filtering, washing, and dehydration were performed, and drying was performed at 110°C for 12 hours to obtain a coated precursor.

(c) Heat treatment

The coating precursor obtained in step (b) and NaOH (Na/(metal other than Na) mol ratio = 0.67) as a sodium compound were mixed to prepare a mixture.

Subsequently, a firing surface under an air atmosphere was heated at a rate of 4°C/min and maintained at 950°C, and the mixture was heat treated for 12 hours and furnace-cooled to finally obtain a positive electrode active material including a sodium manganese-based oxide $Na_{0.67}Ni_{0.315}Co_{0.1}Mn_{0.585}O_2$ having an average particle diameter of 7 to 10 $\mu$m.

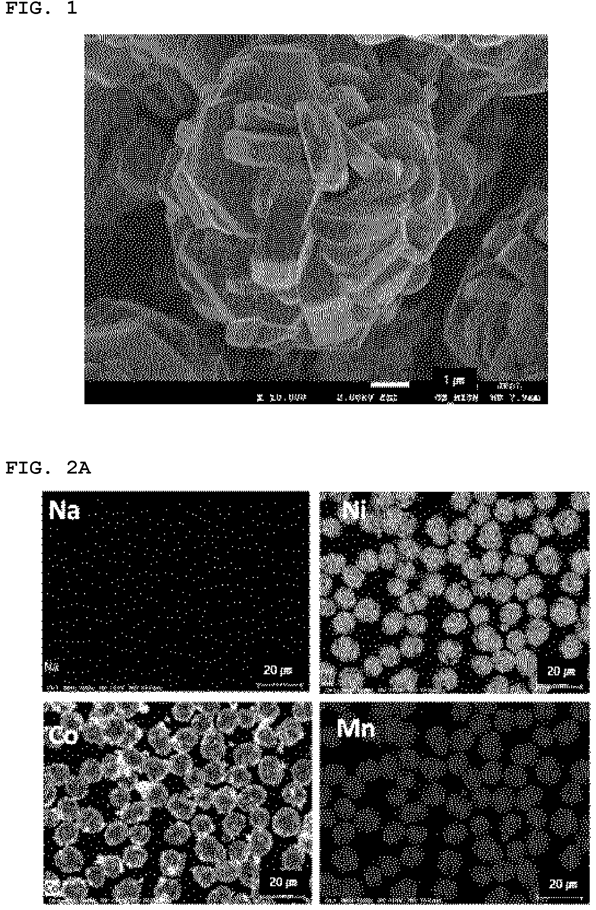

At this time, referring to the SEM photograph of FIG. 1, the obtained sodium manganese-based oxide had a length ratio (La/Lb) of the long axis/short axis of the primary particles of 2 to 5.

Example 2

A positive electrode active material including a sodium manganese-based oxide $Na_{0.67}Ni_{0.3325}Co_{0.05}Mn_{0.6175}O_2$ having an average particle diameter of 7 to 10 $\mu$m was obtained in the same manner as in Example 1, except that $CoSO_4 \cdot 7H_2O$ was added so that the Co/(Ni+Co+Mn) ratio was 5 mol% in step (b) of coating of precursor.

At this time, the obtained sodium manganese-based oxide had a length ratio (La/Lb) of the long axis/short axis of the primary particles of 1 to 4.

Comparative Example 1

A positive electrode active material including a sodium manganese-based oxide $Na_{0.67}Ni_{0.35}Mn_{0.65}O_2$ having an average particle diameter of 7 to 10 $\mu$m was obtained in the same manner as in Example 1, except that the step (b) of coating of precursor was not performed.

Comparative Example 2

A positive electrode active material including a sodium manganese-based oxide $Na_{0.67}Ni_{0.315}Fe_{0.1}Mn_{0.585}O_2$ having an average particle diameter of 7 to 10 $\mu$m was obtained in the same manner as in Example 1, except that step (b) of coating of precursor was performed as described below.

(b) Coating of precursor

NaOH and $NH_4OH$ were fed to the reactor in which the precursor obtained in step (a) was stirred. Thereafter, a $FeSO_4 \cdot 7H_2O$ aqueous solution was fed to the stirred reactor at a speed of 2.5 cc/min for 60 minutes. At this time, $FeSO_4 \cdot 7H_2O$ was weighed to 10 mol% and then fed. After completing the reaction, washing and dehydration were performed, and drying was performed at 110°C for 12 hours to obtain a coated precursor.

Comparative Example 3

400 g of DIW was fed to a batch type 5 L reactor, 23.9 g of a 1 M NaOH solution was fed, and then stirring was maintained at a temperature of 25°C for 15 minutes at a stirring speed of 300 rpm so that pH was 12.8. Subsequently, $Na_{0.67}Ni_{0.35}Mn_{0.65}O_2$ (positive electrode active material of Comparative Example 1) was fed and stirring was performed at 300 rpm.

Thereafter, a cobalt sulfate aqueous solution having a concentration of 1.7 M was reacted for 60 minutes while maintaining pH 11.5 to 12 by adjusting the feeding amount at a speed of 51.18 ml/hr, thereby forming a cobalt hydroxide on the surface of the sodium manganese-based oxide particles. The obtained particles were separated and dried in a vacuum oven at 110°C for 24 hours. Thereafter, the particle powder was fed to an alumina crucible, and then a heat treatment was performed at 600°C for 12 hours under an air atmosphere to produce a positive electrode active material including $Na_{0.67}Ni_{0.315}Co_{0.1}Mn_{0.585}O_2$.

Comparative Example 4

A positive electrode active material including $Na_{0.67}Ni_{0.315}Co_{0.1}Mn_{0.585}O_2$ was produced in the same manner as in Comparative Example 3, except that the heat treatment for cobalt doping was performed at 700°C.

Production Example 2. Production of sodium secondary battery

90 wt% of each of the positive electrode active material produced according to Production Example 1, 5.5 wt% of carbon black, and 4.5 wt% of a PVDF binder were dispersed in 30 g of N-methyl-2 pyrrolidone (NMP) to produce a positive electrode slurry. The positive electrode slurry was uniformly applied on an aluminum thin film having a thickness of 15 $\mu$m, and dried under vacuum at 135°C to produce a positive electrode for a sodium secondary battery.

For the positive electrode, a sodium foil was used as a counter electrode, a porous polyethylene membrane (Celgard 2300, thickness: 25 $\mu$m) was used as a separator, and an electrolytic solution in which $NaPF_6$ was present at a concentration of 1.15 M in a mixed solvent of ethylene carbonate and ethyl methyl carbonate at a volume ratio of 3:7 was used to produce a coin battery.

**Experimental Examples**

Experimental Example 1. Confirmation of metal element distribution uniformity on surface and cross section of positive electrode active material particles

SEM/EDS analysis was performed in order to confirm a change in metal element contents. The SEM/EDS photograph of the sodium manganese-based oxide was obtained after treating the sodium manganese-based oxide with FIB.

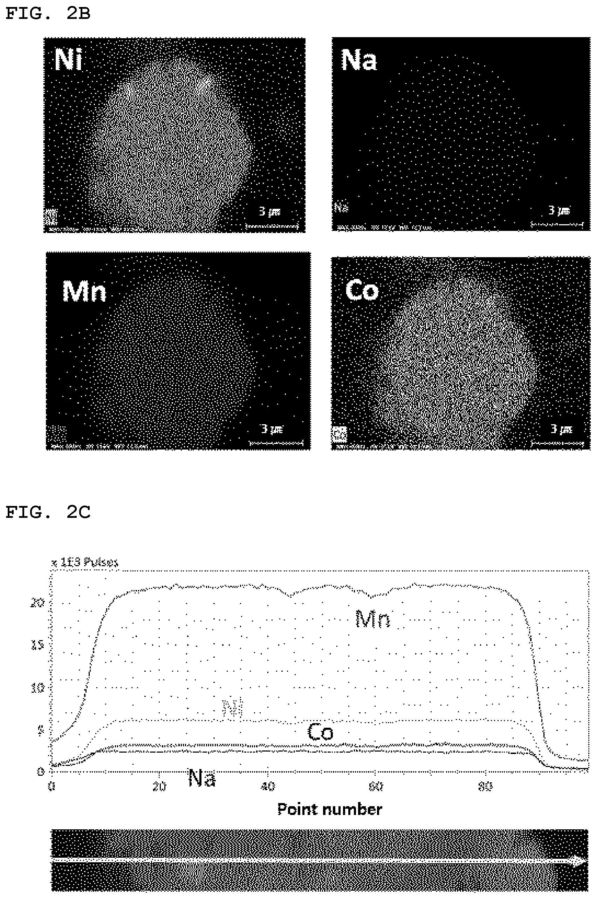

FIGS. 2A and 2B are surface SEM/EDS photographs (FIG. 2A) and cross-sectional SEM/EDS photographs (FIG. 2B) of positive electrode active material secondary particles according to Example 1, respectively.

FIG. 2C is a graph (EDS line scanning) showing a change in contents of metal elements (Ni, Co, Mn) through EDS analysis for a direction indicated in the cross-sectional SEM image of the positive electrode active material secondary particles produced in Example 1.

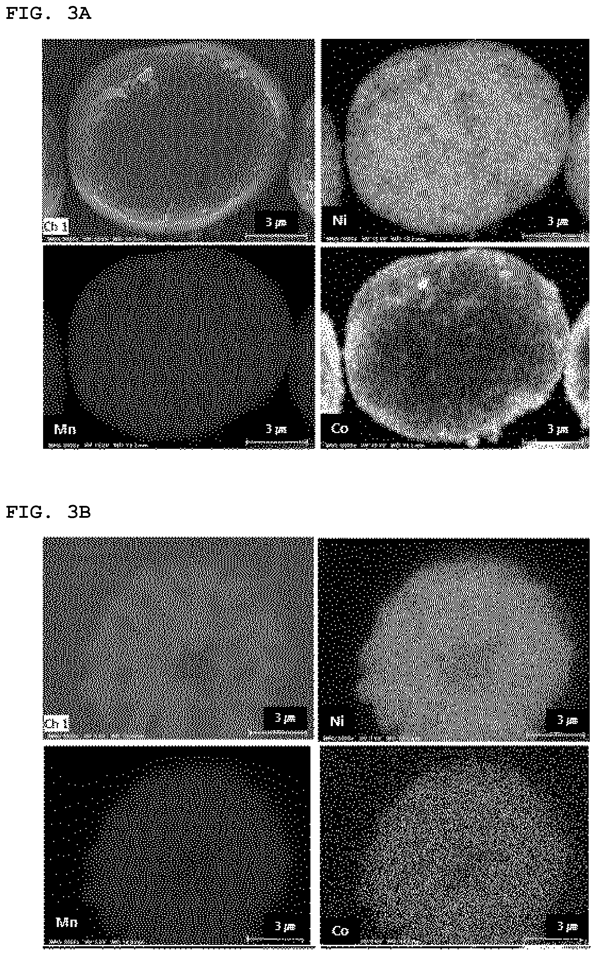

FIGS. 3A and 3B are surface SEM/EDS photographs (FIG. 3A) and cross-sectional SEM/EDS photographs (FIG. 3B) of positive electrode active material secondary particles according to Example 2, respectively.

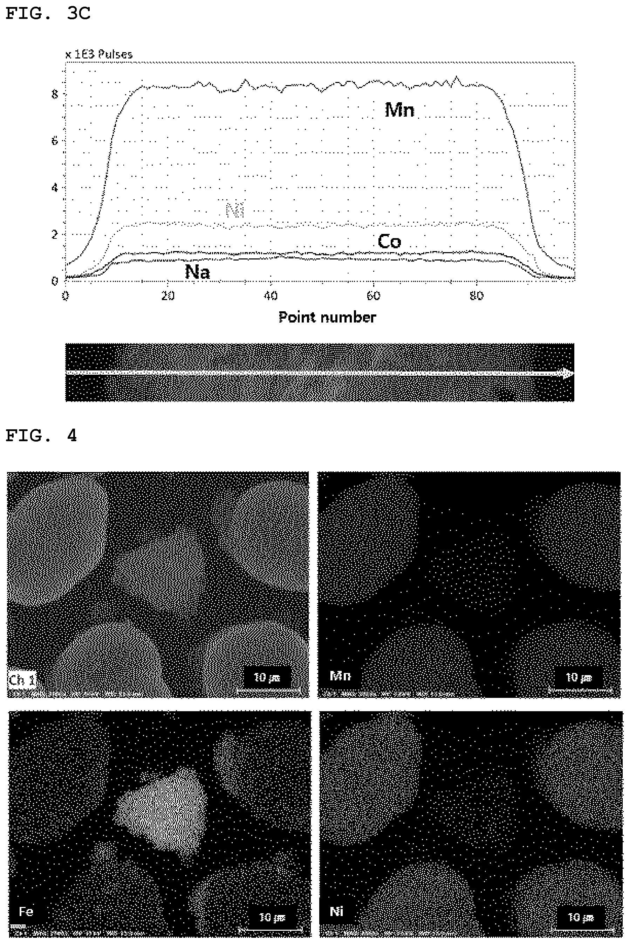

FIG. 3C is a graph (EDS Line scanning) showing a change in contents of metal elements (Ni, Co, Mn) through EDS analysis for a direction indicated in the cross-sectional SEM image of the positive electrode active material secondary particles produced in Example 2.

FIG. 4 is surface SEM/EDS photographs of positive electrode active material secondary particles produced in Comparative Example 2.

The following Table 1 shows concentrations (mol%) of Ni, Co, Fe, and Mn in the center portion and the surface portion of the positive electrode active material secondary particles. The concentrations (mol%) of Ni, Co, Fe, and Mn in the center portion and the surface portion of the secondary particles were calculated from Line EDS spectrum, and the concentrations of Ni, Co, Fe, and Mn in the entire portion of the particles (bulk) were calculated by ICP analysis.

[Table 1]

| M/M$_{total}$ (mol%) | Bulk (Ni/Co or Fe/Mn) | Center portion (Ni/Co or Fe/Mn) | Surface portion (Ni/Co or Fe/Mn) |
|---|---|---|---|
| Example 1 | 31.5/10/58.5 | 29.3//10.6/60.1 | 29.6/10.8/59.6 |
| Example 2 | 33.25/5/61.25 | 33/5.2/61.8 | 32.2/5.7/62.1 |
| Comparative Example 2 | 31.5/10/58.5 | Non-uniform surface coating | Non-uniform surface coating |

(in Table 1, an area corresponding to 0 to 50% of the length (R) from the center to the surface based on the positive electrode active material secondary particle cross section is defined as the center portion and an area corresponding to 50 to 100% is defined as the surface portion.)

The positive electrode active material doped with Co produced in Examples 1 and 2 was confirmed to have uniform cobalt doping on the surface and in the inside of the secondary particles, and it was confirmed that a transition metal ternary oxide having a uniform composition was able to be produced by the doping technology of the present invention.

Referring to Table 4, in the case of the positive electrode active material doped with Fe produced in Comparative Example 2, a Fe agglomeration phenomenon was confirmed, doping uniformity was significantly low as compared with Examples 1 and 2, and specifically, it was confirmed that concentric distribution on the surface portion of the positive electrode active material secondary particles was formed to form an island-shaped coating layer or excessive coating/doping was formed selectively on some particles of a plurality of secondary particles. Thus, it was confirmed that when the production method of the present invention was applied, Fe doping was not easy.

Experimental Example 2. Confirmation of P2-type layered structure and heterogeneous phase through XRD analysis

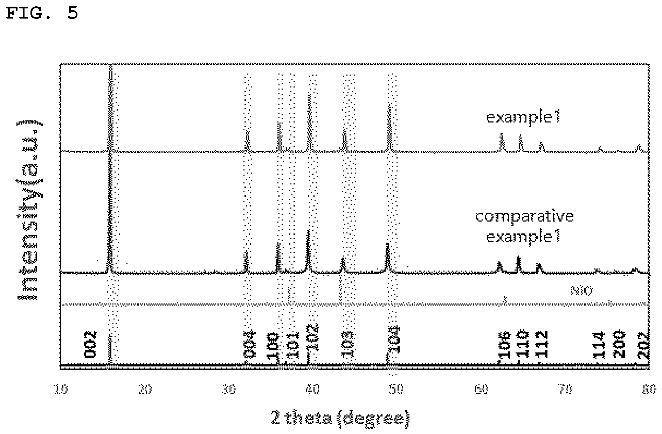

FIG. 5 shows results of XRD analysis of positive electrode active materials (bulk) produced in Example 1 and Comparative Example 1. In addition, the following Table 2 shows ratios of NiO (heterogeneous phase) formed in the positive electrode active material, which was measured using a TOPAS program.

[Table 2]

|  | NiO (%) |
|---|---|
| Example 1 | 2.49 |
| Example 2 | 2.13 |
| Comparative Example 1 | 0.81 |
| Comparative Example 2 | 2.24 |
| Comparative Example 3 | 2.66 |
| Comparative Example 4 | 3.09 |

Referring to FIG. 5 and Table 2, as a result of XRD analysis of the positive electrode active material produced in Example 1, (004), (100), (101), (102), (103), (104), and (002) peaks were detected, and thus, the positive electrode active materials were confirmed to have a P2-type layered structure. In addition, referring to FIGS. 2B and 2C, it was confirmed that a small amount of NiO was synthesized during Co doping in Examples 1 and 2, but Co and Mn-related heterogeneous phase (such as $CoO_2$ and $MnO_2$) was not produced.

Experimental Example 3. Evaluation of electrochemical properties of sodium secondary battery

A charge and discharge experiment to which 25°C, a voltage range of 2.0 V to 4.6 V, and a discharge rate of 0.1 C to 5.0 C were applied was performed on the sodium secondary battery (coin cell) produced in Production Example 2 using an electrochemical analyzer (Toyo, Toscat-3100), thereby measuring an initial charge capacity, an initial discharge capacity, an initial reversible efficiency, and capability rate (discharge capacity ratio; C-rate).
In addition, the same sodium secondary battery was charged/discharged 50 times under a condition of 1 C/1 C at 25°C in an operation voltage range of 2.0 V to 4.6 V, and then a ratio of discharge capacity at 50th cycle as compared with an initial capacity (cycle capacity retention rate) was measured.
The measurement results are shown in the following Table 3.

[Table 3]

|  | Initial discharge capacity (0.1 C) (mAh/g) | Cycle life (50cy) (%) | Capability rate (5C/0.1C) (%) | Charge and discharge efficiency (%) |
|---|---|---|---|---|
| Example 1 | 159 | 64 | 76 | 96.2 |
| Example 2 | 166 | 57 | 67 | 94.6 |
| Comparative Example 1 | 157 | 66 | 61 | 94.5 |
| Comparative Example 2 | 141 | 32 | 3 | 92.1 |

Referring to Table 3, it was confirmed that the sodium secondary battery produced by Examples 1 and 2 had improved initial discharge capacity, capability rate, and charge and discharge efficiency as compared with Comparative Examples 1 and 2, and had the cycle life which was maintained at the similar level to Comparative Example 1. In Comparative Example 2, since the electrolytic solution side reaction was increased by Fe coating present between primary particles, it was confirmed that cell characteristics were deteriorated overall.

As described above, although the present invention has been shown and described with respect to specific exemplary embodiments, it will be obvious to those skilled in the art that the present invention may be variously modified and altered without departing from the spirit and scope of the present invention as defined by the following claims.

**Claims**

1.   A method for producing a positive electrode active material for a sodium secondary battery, the method comprising:

   a) feeding a composite transition metal hydroxide precursor and a first cobalt compound to a reactor and forming a second cobalt compound on a surface of particles of the composite transition metal hydroxide precursor; and
   b) mixing the composite transition metal hydroxide precursor having the second cobalt compound formed on the surface of the particles and a sodium compound and then performing a heat treatment to produce a sodium manganese-based oxide doped with cobalt (Co),

   wherein the sodium manganese-based oxide includes at least nickel (Ni), manganese (Mn), and cobalt (Co), and contains 55 mol% or more of manganese in all metals other than sodium.

2.   The method for producing a positive electrode active material for a sodium secondary battery of claim 1, wherein a) includes:

   a1) feeding the composite transition metal hydroxide precursor and a solvent to the reactor and performing stirring; and
   a2) feeding the first cobalt compound to the reactor and performing stirring to form a cobalt hydroxide on the surface of the composite transition metal hydroxide precursor particles.

3.   The method for producing a positive electrode active material for a sodium secondary battery of claim 1, wherein the composite transition metal hydroxide precursor of a) contains 55 mol% or more of manganese in all metals.

4.   The method for producing a positive electrode active material for a sodium secondary battery of claim 1, wherein the first cobalt compound of a) is $Co(OH)_2$, $CoOOH$, $Co(OCOCH_3)_2$, $Co(NO_3)_2$, $CoSO_4$, $Co(SO_4)_2$, or a combination thereof.

5.   The method for producing a positive electrode active material for a sodium secondary battery of claim 1, wherein the heat treatment of b) is performed at 800 to 1,100°C for 5 to 40 hours.

6.   The method for producing a positive electrode active material for a sodium secondary battery of claim 1, wherein the sodium manganese-based oxide of b) has a P2-type layered structure.

7.   A positive electrode active material for a sodium secondary battery comprising the sodium manganese-based oxide produced by the method of claim 1.

8.   The positive electrode active material for a sodium secondary battery of claim 7,

   wherein the sodium manganese-based oxide includes at least sodium (Na), nickel (Ni), manganese (Mn), and cobalt (Co), and has a manganese content of 55 mol% or more in all metals other than sodium (M) and
   the sodium manganese-based oxide is a secondary particle formed by agglomeration of at least one primary particle, and may satisfy the following Relation 1:

$$[Relation\ 1]$$

$$(Dc-Ds)/Dt \leq \pm 10\%$$

   wherein when an area corresponding to 0 to 50% of a length (R) from a center to a surface based on a cross section of the secondary particle is defined as a first area ($R_1$) and an area corresponding to 50 to 100% of the length is defined as a second area ($R_2$),
   Ds, Dc, and Dt are measured in the first area ($R_1$), the second area ($R_2$), and the entire cross section of the particle ($R_1+R_2$), respectively, and are molar concentrations of cobalt (Co) to all metals other than sodium (M), respectively.

9. The positive electrode active material for a sodium secondary battery of claim 7,

   wherein the sodium manganese-based oxide is a secondary particle formed by agglomeration of at least one primary particles, and
   the primary particles include plate-type primary particles having an aspect ratio of 1 to 5.

10. The positive electrode active material for a sodium secondary battery of claim 7, wherein the sodium manganese-based oxide has an average particle diameter of the secondary particles of 5 to 15 $\mu$m.

11. The positive electrode active material for a sodium secondary battery of claim 7, wherein the sodium manganese-based oxide is represented by the following Chemical Formula 2:

    [Chemical Formula 2]        $Na_aNi_xCo_yM1_zMn_{1-x-y-z}O_2$

    wherein

    M1 is at least one selected from P, Sr, Ba, B, Ti, Mg, Zr, Al, W, Fe, Ce, Hf, Ta, Cr, F, Mg, Cr, V, Fe, Zn, Si, Y, Ga, Sn, Mo, Ge, Nd, Gd, and Cu, and
    $0.5 \leq a \leq 0.8$, $0.05 \leq x \leq 0.45$, $0.01 \leq y \leq 0.15$, $0 \leq z \leq 0.05$, and $0.55 \leq 1-x-y-z \leq 0.85$ are satisfied.

12. The positive electrode active material for a sodium secondary battery of claim 7, wherein the sodium manganese-based oxide shows at least one peak selected from the group consisting of (004), (100), (101), (102), (103), (104), and (002) peaks by X-ray diffraction analysis (XRD).

13. The positive electrode active material for a sodium secondary battery of claim 7, wherein the sodium manganese-based oxide has a NiO ratio of 3% or less as measured by a Rietveld refinement method based on X-ray diffraction analysis.

14. A positive electrode for a sodium secondary battery comprising the positive electrode active material of claim 7.

15. A sodium secondary battery comprising the positive electrode of claim 14.

FIG. 1

FIG. 2A

FIG. 2B

FIG. 2C

FIG. 3A

FIG. 3B

FIG. 3C

FIG. 4

FIG. 5

## INTERNATIONAL SEARCH REPORT

| International application No. |
|---|
| **PCT/KR2023/007861** |

### A. CLASSIFICATION OF SUBJECT MATTER

**C01G 53/00**(2006.01)i; **H01M 4/36**(2006.01)i; **H01M 4/505**(2010.01)i; **H01M 4/525**(2010.01)i; **H01M 4/131**(2010.01)i; **H01M 10/054**(2010.01)i; **H01M 4/02**(2006.01)i

According to International Patent Classification (IPC) or to both national classification and IPC

### B. FIELDS SEARCHED

Minimum documentation searched (classification system followed by classification symbols)

C01G 53/00(2006.01); C01G 51/04(2006.01); H01M 10/054(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 수소발생장치(hydrogen generator), 텅스텐(tungsten), 산소빈자리(oxygen vacancy), 촉매(catalyst)

### C. DOCUMENTS CONSIDERED TO BE RELEVANT

| Category* | Citation of document, with indication, where appropriate, of the relevant passages | Relevant to claim No. |
|---|---|---|
| X | CN 115028215 A (ZHEJIANG POWER NEW ENERGY CO., LTD.) 09 September 2022 (2022-09-09)<br>See claim 3; and example 1. | 1-7,13-15 |
| Y | | 8-12 |
| Y | CHOI, J. et al. A P2-type Na0.7(Ni0.6Co0.2Mn0.2)O2 cathode with excellent cyclability and rate capability for sodium ion batteries. Chem. Commun. 2019, vol. 55, pp. 11575-11578.<br>See page 11576; and figure 2. | 8-12 |
| A | KR 10-2020-0132772 A (IUCF-HYU (INDUSTRY-UNIVERSITY COOPERATION FOUNDATION HANYANG UNIVERSITY)) 25 November 2020 (2020-11-25)<br>See entire document. | 1-15 |
| A | KR 10-2019-0040133 A (TANAKA CHEMICAL CORPORATION) 17 April 2019 (2019-04-17)<br>See entire document. | 1-15 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 September 2023** | **08 September 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/007861** |

**C.     DOCUMENTS CONSIDERED TO BE RELEVANT**

| Category* | Citation of document, with indication, where appropriate, of the relevant passages | Relevant to claim No. |
| --- | --- | --- |
| A | KR 10-2017-0097666 A (SUMITOMO METAL MINING CO., LTD.) 28 August 2017 (2017-08-28)<br>See entire document. | 1-15 |

Form PCT/ISA/210 (second sheet) (July 2022)

**INTERNATIONAL SEARCH REPORT**
Information on patent family members

International application No.

**PCT/KR2023/007861**

| Patent document cited in search report | | | Publication date (day/month/year) | Patent family member(s) | | | Publication date (day/month/year) |
|---|---|---|---|---|---|---|---|
| CN | 115028215 | A | 09 September 2022 | None | | | |
| KR | 10-2020-0132772 | A | 25 November 2020 | KR | 10-2466222 | B1 | 11 November 2022 |
| | | | | WO | 2020-235909 | A1 | 26 November 2020 |
| KR | 10-2019-0040133 | A | 17 April 2019 | CN | 109643797 | A | 16 April 2019 |
| | | | | JP | 6669878 | B2 | 18 March 2020 |
| | | | | US | 2019-0190025 | A1 | 20 June 2019 |
| | | | | WO | 2018-043447 | A1 | 08 March 2018 |
| KR | 10-2017-0097666 | A | 28 August 2017 | CN | 107108266 | A | 29 August 2017 |
| | | | | CN | 107108266 | B | 17 May 2019 |
| | | | | EP | 3239103 | A1 | 01 November 2017 |
| | | | | EP | 3239103 | B1 | 31 March 2021 |
| | | | | JP | 2016-117625 | A | 30 June 2016 |
| | | | | JP | 6265117 | B2 | 24 January 2018 |
| | | | | KR | 10-2381595 | B1 | 04 April 2022 |
| | | | | PL | 3239103 | T3 | 20 September 2021 |
| | | | | US | 10305105 | B2 | 28 May 2019 |
| | | | | US | 2017-0352884 | A1 | 07 December 2017 |
| | | | | WO | 2016-103975 | A1 | 30 June 2016 |

Form PCT/ISA/210 (patent family annex) (July 2022)